# FASCICULE DE BREVET EUROPEEN

(11) **EP 3 083 124 B1**
(45) Date de publication et mention de la délivrance du brevet: **11.10.2017**
(21) Numéro de dépôt: 14825321.4
(22) Date de dépôt: 19.12.2014
(51) Int. Cl.: B23K 20/12, B23P 21/00

(54) **DISPOSITIF ET SYTÈME D'ASSEMBLAGE D'UNE PLURALITÉ DE PANNEAUX.**
VORRICHTUNG UND SYSTEM ZUR MONTAGE VON MEHREREN BAUPLATTEN
APPARATUS AND SYSTEM TO ASSEMBLE A PLURALITY OF PANELS

(30) Priorité: 19.12.2013 FR 1303001
(43) Date de publication de la demande: 26.10.2016
(73) Titulaire: Stelia Aerospace, 17300 Rochefort (FR)
(72) Inventeur: DARRAS, Franck, F-83300 Meaulte (FR); WATTIER, Yannick, F-59224 Thiant (FR)
(74) Mandataire: Argyma
(86) Numéro de dépôt international: PCT/EP2014/078639
(87) Numéro de publication internationale: WO 2015/091903

(56) Documents cités:
- EP-A1- 1 736 271
- DE-A1-102006 055 286
- US-A- 6 029 352
- US-A1- 2005 045 693

## Description

### DOMAINE TECHNIQUE

La présente invention concerne le domaine de l'assemblage de panneaux de fuselage d'un aéronef et concerne plus particulièrement un dispositif pour l'assemblage d'une pluralité de panneaux de fuselage d'un aéronef, notamment de la pointe avant du fuselage d'un aéronef. Le document DE 10 2006 055 286 A1 décrit un dispositif pour l'assemblage d'une pluralité de panneaux suivant le préambule de la revendication 1.

### ETAT DE L'ART

La pointe avant du fuselage d'un aéronef est fabriquée de manière connue par l'assemblage bord à bord d'une pluralité de panneaux.

Pour ce faire, les bords des panneaux à joindre sont tout d'abord usinés séparément puis soudés ensemble.

L'usinage des bords à joindre permet de supprimer la matière superflue issue de la fabrication des panneaux et de lisser les bords afin d'améliorer la qualité et la régularité de la jonction entre deux panneaux.

Les panneaux étant usinés l'un après l'autre de manière indépendante, les bords de deux panneaux à joindre ensemble ne sont pas nécessairement complémentaires.

Il en résulte un jeu entre les bords des panneaux, qui est variable le long de la jonction et ce d'autant plus que les panneaux sont courbés. Un tel jeu dégrade la qualité, l'efficacité et l'esthétique de la soudure, ce qui présente un premier inconvénient.

De plus, le procédé d'assemblage de panneaux courbés peut se révéler complexe, fastidieux et chronophage car il faut usiner de manière indépendante chaque panneau sur une table d'usinage, déplacer les panneaux sur une table de soudage, les positionner bord à bord et les souder, ce qui présente un deuxième inconvénient important.

En outre, il n'est pas possible avec les procédés d'assemblage existants de réaliser à la fois un usinage, un décapage et un soudage d'une pluralité de panneaux avec un même dispositif. En effet, les dispositifs existants ne permettent pas d'avoir à la fois, sur un même dispositif, un espace pour déplacer un outil d'usinage et/ou de décapage le long des faces externes des panneaux et un contre-appui sur lesdites faces externes afin de souder lesdits panneaux, ce qui présente un troisième inconvénient.

### PRESENTATION GENERALE DE L'INVENTION

L'invention a donc pour but de remédier à ces inconvénients en proposant un dispositif porte-pièces pour l'assemblage d'une pluralité de panneaux de fuselage d'un aéronef qui soit à la fois simple, efficace, fiable et rapide à mettre en oeuvre.

A cet effet, l'invention concerne un dispositif pour l'assemblage d'une pluralité de panneaux de fuselage d'un aéronef, ledit dispositif comprenant au moins un corps d'enclume comportant une surface de support de ladite pluralité de panneaux, ledit corps d'enclume comprenant au moins un rail d'enclume monté mobile dans une cavité du corps d'enclume et configuré pour se déplacer entre une position haute dans laquelle la surface supérieure du rail d'enclume s'étend dans le prolongement de la surface de support et une position basse dans laquelle un espace de travail est créé entre la surface supérieure du rail d'enclume et la surface de support de sorte à permettre le passage d'un outil d'usinage et/ou de décapage.

Le dispositif selon l'invention permet donc, notamment grâce à son rail d'enclume mobile, de créer à la fois un espace pour déplacer un outil d'usinage et/ou de décapage le long des faces des panneaux et un contre-appui pour lesdites faces afin de souder les bords à joindre desdits panneaux.

Ainsi, un même dispositif peut avantageusement être utilisé à la fois pour usiner et/ou décaper les bords à joindre des panneaux et pour les souder sans qu'il soit nécessaire de les manipuler une fois qu'ils ont été positionnés sur le dispositif.

De plus, un tel dispositif permet d'usiner ou de souder plusieurs panneaux simultanément, ce qui rend leur assemblage à la fois aisé et rapide.

Dans une forme de réalisation préférée du dispositif selon l'invention, le corps d'enclume comprend deux rails d'enclume.

Selon une caractéristique de l'invention, le rail d'enclume comprend une poutre de structure, de préférence métallique, s'étendant sur toute la longueur du corps d'enclume.

De manière préférée, le rail d'enclume comprend des moyens de dissipation de chaleur, de préférence montés sur la partie inférieure de la poutre de structure. De tels moyens de dissipation de chaleur peuvent se présenter, par exemple, sous la forme d'un radiateur comprenant des lames en aluminium.

De manière avantageuse, la poutre de structure comporte deux nervures de support d'un premier panneau et d'un deuxième panneau servant de contre-appui robuste pour le soudage de leurs bords et permettant en outre de guider un porte-outil de sorte qu'un outil puisse se déplacer le long du rail d'enclume.

De manière avantageuse encore, la poutre de structure comporte un porte-outil et une rampe de guidage dudit porte-outil.

Selon un aspect préféré de l'invention, la rampe de guidage s'étend selon la longueur de la poutre de structure et latéralement à cette dernière de manière à permettre le déplacement du porte-outil le long de la poutre de structure sur la longueur des bords à joindre.

Le porte-outil peut comporter un déflectomètre de manière à contrôler une opération réalisée par l'outil d'usinage et/ou l'outil de décapage sur les bords à joindre de panneaux.

Selon un aspect de l'invention, le dispositif comprend un outil d'usinage et/ou de décapage monté dans le porte-outil du rail d'enclume.

L'invention concerne aussi un système pour l'assemblage d'une pluralité de panneaux de fuselage d'un aéronef comprenant un dispositif tel que décrit précédemment, au moins un premier panneau et un deuxième panneau, et des moyens de déplacement montés sur le corps d'enclume, lesdits moyens de déplacement étant agencés pour déplacer le premier panneau par rapport au deuxième panneau entre une première position d'usinage dans laquelle un bord du premier panneau et un bord du deuxième panneau sont écartés d'une distance d'usinage de manière à autoriser le passage d'un outil d'usinage entre lesdits bords afin de les usiner simultanément et une deuxième position de soudage dans laquelle ledit bord du premier panneau et ledit bord du deuxième panneau sont adjacents et en appui sur ledit corps d'enclume.

Les bords usinés du premier panneau et du deuxième panneau sont complémentaires puisqu'ils ont été usinés en même temps et par un même outil, ce qui permet d'éviter l'apparition d'un jeu trop important entre les bords à joindre des panneaux et de réaliser ainsi un soudage qui est à la fois solide et esthétique.

On notera en outre que, lorsque les panneaux comprennent un revêtement qu'il est nécessaire de retirer au niveau des bords à joindre afin d'en permettre le soudage, les moyens de déplacement sont agencés pour déplacer le premier panneau par rapport au deuxième panneau dans une troisième position de décapage dans laquelle un bord du premier panneau et un bord du deuxième panneau sont écartés d'une distance de décapage de manière à autoriser le passage d'un outil de décapage dudit revêtement sur lesdits bords afin de les décaper simultanément.

Selon une caractéristique de l'invention, les moyens de déplacement comportent un support mobile sur lequel est positionné le premier panneau.

De préférence, les moyens de déplacement comportent deux supports mobiles de sorte à permettre l'assemblage de trois panneaux de fuselage simultanément, par exemple afin d'assembler une partie inférieure d'une pointe avant d'un aéronef.

De préférence encore, les moyens de déplacement sont configurés pour déplacer le premier panneau latéralement et verticalement.

De manière préférée, les moyens de déplacement du premier panneau par rapport au deuxième panneau comportent un mécanisme de guidage du support mobile par rapport à une première partie latérale du corps d'enclume.

Avantageusement, le support mobile comprend des moyens de maintien du bord dudit premier panneau.

Selon une caractéristique de l'invention, les moyens de maintien comportent au moins une table aspirante.

Selon une autre caractéristique de l'invention, le premier panneau est incurvé.

Selon un aspect de l'invention, le corps d'enclume possède une surface de support supérieure de forme incurvée de manière à épouser la forme d'une pointe avant d'aéronef.

Avantageusement, le système comprend des moyens de positionnement des panneaux de manière à augmenter la précision et la qualité l'assemblage.

De tels moyens de positionnement peuvent se présenter, par exemple, sous la forme d'une pluralité de broches et d'alésages complémentaires.

Selon une caractéristique de l'invention, des moyens de positionnement sont montés sur le ou les supports mobiles.

Selon une autre caractéristique de l'invention, le corps d'enclume comporte des moyens de positionnement.

Dans une forme de réalisation préférée, le système comprend des moyens de maintien du premier panneau et du deuxième panneau.

De préférence, les moyens de maintien comprennent une pluralité de ventouses, disposées de préférence à la fois sur le corps d'enclume et sur le ou les supports mobiles et agencées pour maintenir le premier panneau et le deuxième panneau.

De préférence encore, les moyens de maintien comprennent au moins une table aspirante agencée chacune pour recevoir un bord à joindre d'un panneau.

Selon un aspect préféré, le corps d'enclume comprend deux tables aspirantes.

Selon une caractéristique de l'invention, la ou les tables aspirantes comprennent des moyens de dissipation de chaleur, par exemple un radiateur comprenant des lames en aluminium.

En position d'usinage, les bords à joindre de deux panneaux sont espacés d'une distance d'usinage de préférence comprise entre 0 et 5 mm.

En position de décapage, les bords à joindre de deux panneaux sont espacés d'une distance de décapage de préférence comprise entre 0 et 1 mm.

En position de soudage, les bords à joindre de deux panneaux sont disposés bord à bord avec un jeu entre lesdits bords inférieur à 0,5 mm.

### PRESENTATION DES FIGURES

D'autres caractéristiques et avantages de l'invention apparaîtront lors de la description qui suit faite en regard des figures annexées données à titre d'exemples non limitatifs et dans lesquelles, des références identiques étant données à des objets semblables :
- la figure 1 illustre une forme de réalisation du dispositif selon l'invention à vide,
- la figure 2 illustre le dispositif de la figure 1 sur lequel sont disposés deux panneaux latéraux,
- la figure 3 illustre le dispositif de la figure 1 sur lequel sont disposés deux panneaux latéraux et un panneau central,
- la figure 4 illustre un rail d'enclume du dispositif de la figure en position haute et en position basse,
- les figures 5 à 8 sont des vues en perspective d'un rail d'enclume sur lequel est disposé un outil,
- la figure 9 illustre le dispositif de la figure 3 en position d'usinage,
- la figure 10 illustre le dispositif de la figure 3 en position de soudage, et,
- la figure 11 décrit un mode de mise en oeuvre préféré du procédé selon l'invention.

### DESCRIPTION D'UNE FORME DE REALISATION PREFEREE

L'invention concerne un dispositif d'assemblage sur lequel est disposée une pluralité de panneaux à assembler.

### 1) Dispositif 1

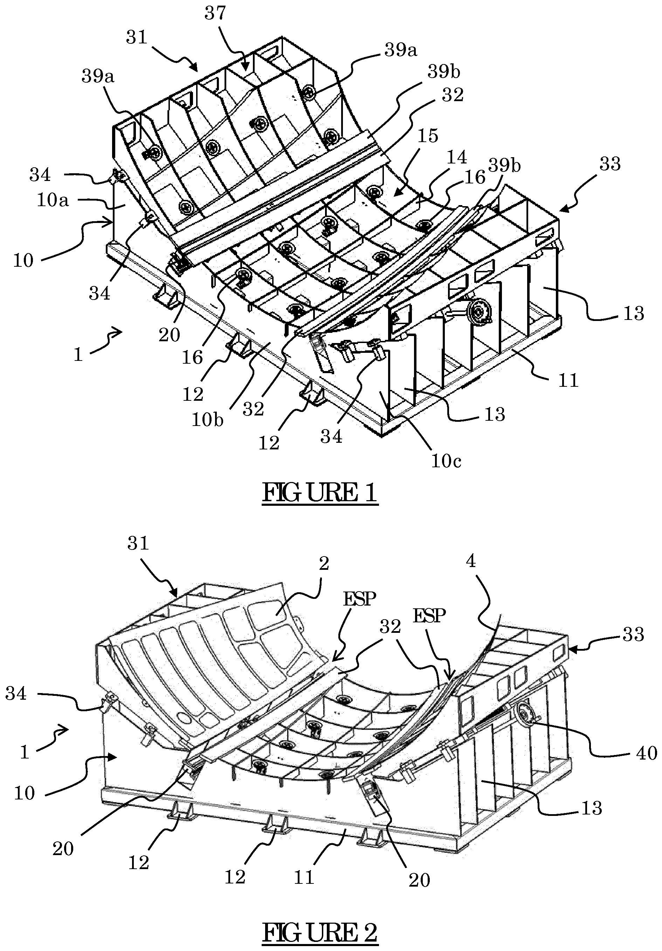

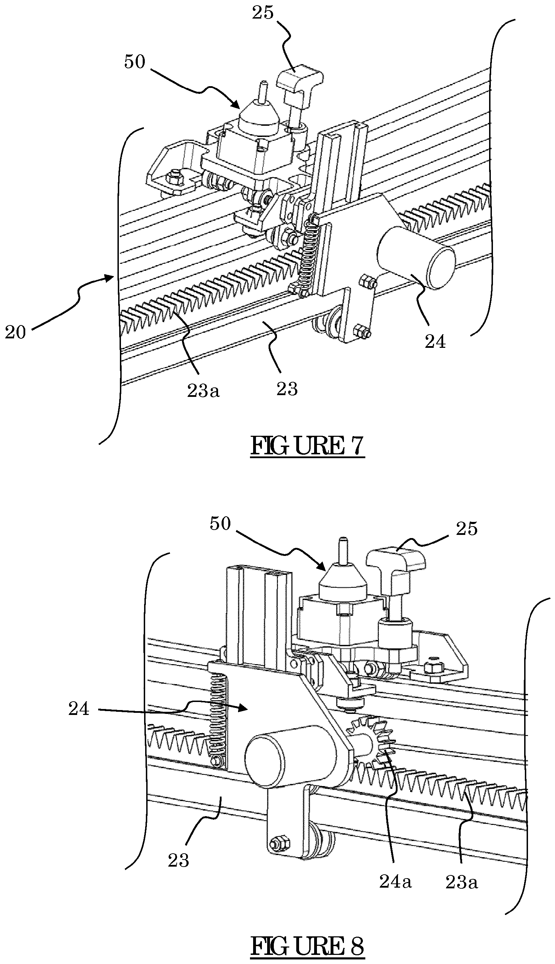

Les figures 1 à 10 décrivent une forme de réalisation préférée du dispositif selon l'invention qui permet l'assemblage de trois panneaux 2, 3 et 4 de fuselage d'un aéronef simultanément, en particulier, un panneau central 3, un premier panneau latéral 2 et un deuxième panneau latéral 4.

A cette fin et selon l'invention, le dispositif 1 comprend un corps d'enclume 10, des premiers moyens de déplacement montés sur ledit corps d'enclume 10 et adaptés pour déplacer le premier panneau latéral 2 relativement au panneau central 3 et des deuxièmes moyens de déplacement montés sur ledit corps d'enclume 10 et adaptés pour déplacer le deuxième panneau latéral 2 relativement au panneau central 3.

Par la suite, on désigne système d'assemblage le dispositif d'assemblage 1 équipé de ses panneaux 2, 3 et 4.

### a) Corps d'enclume 10

Dans cet exemple, comme illustré notamment à la figure 1, le corps d'enclume 10 se présente sous la forme d'une armature structurelle comprenant une base rectangulaire 11 reposant sur des renforts 12 et sur laquelle est montée une pluralité de raidisseurs verticaux 13 disposés parallèlement et reliés entre eux par des raidisseurs horizontaux 14, définissant ainsi une pluralité de caissons 15.

Le corps d'enclume 10 possède une surface de support supérieure de forme incurvée de manière à épouser la forme d'une pointe avant d'aéronef mais il va de soi que la forme de de la surface de support pourrait être différente en fonction de la destination des panneaux à assembler.

En référence à la figure 1, le corps d'enclume 10 comporte une partie centrale 10b et deux parties latérales 10α et 10c pour supporter respectivement le panneau central 3 et les panneaux latéraux 2, 4.

Une pluralité de ventouses 16 est disposée dans les caissons 15 de la partie centrale du corps d'enclume 10 de manière à maintenir le panneau central 3 fixement relativement au corps d'enclume 10. En outre, afin de positionner le panneau central 3 sur le dispositif 1, le corps d'enclume 10 comprend des moyens de positionnement dudit panneau 3 dans une position prédéterminée afin d'effectuer les étapes d'usinage et de soudage.

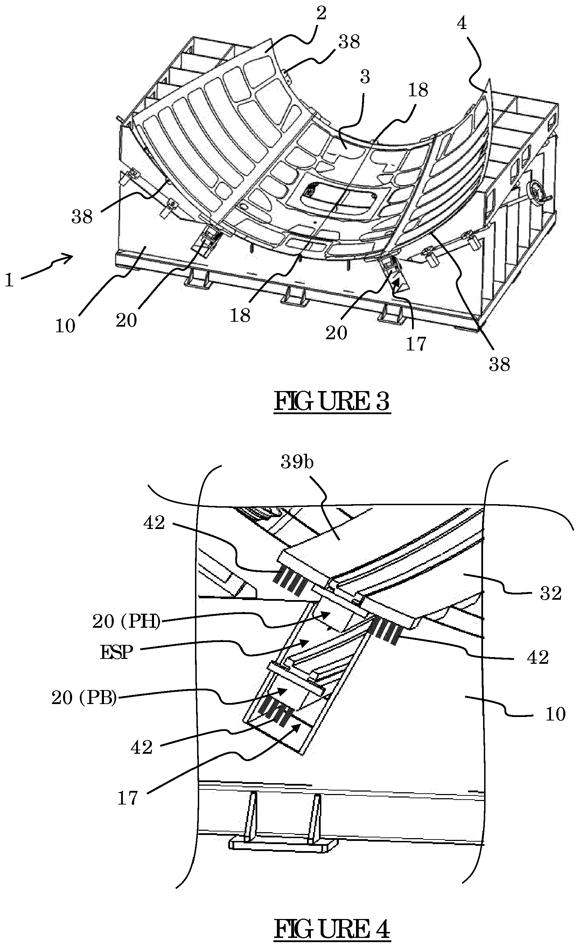

De tels moyens de positionnement se présentent dans cet exemple sous la forme de broches 18 configurées pour être reçues respectivement dans des alésages formés dans le panneau central 3 de sorte à le maintenir dans la position prédéterminée fixe par rapport au corps d'enclume 10 comme illustré à la figure 3.

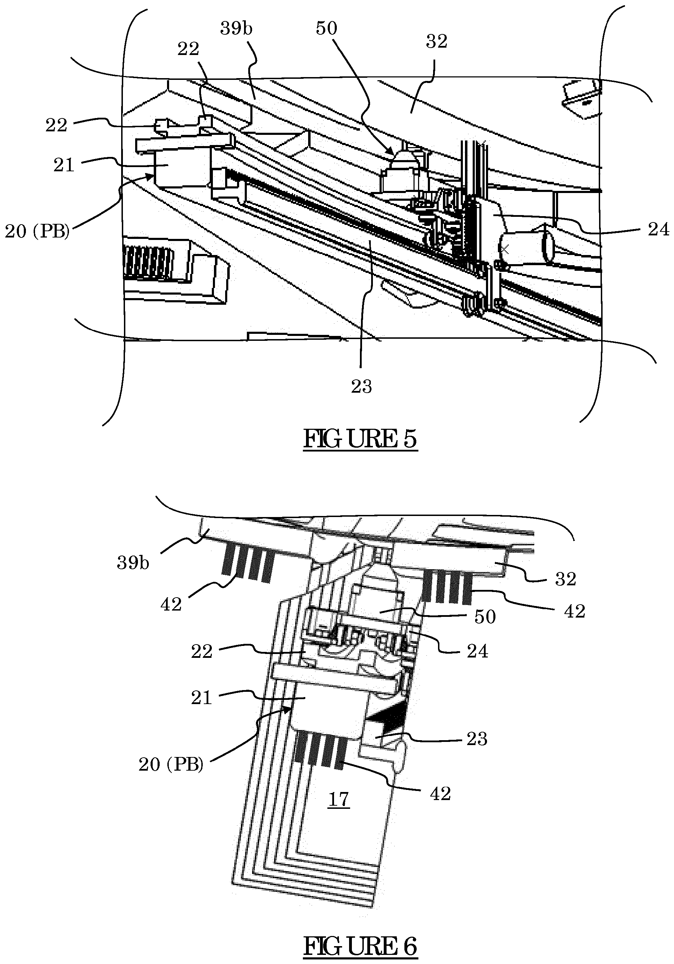

Dans cet exemple, le corps d'enclume 10 comprend deux rails d'enclume 20 montés respectivement mobiles dans deux cavités 17 du corps d'enclume 10 (en référence aux figures 3, 4 et 6). Chaque rail d'enclume 20 est configuré pour se déplacer entre une position haute PH, illustrée aux figures 4 à 6, dans laquelle la surface supérieure du rail d'enclume 20 s'étend dans le prolongement de la surface de support du corps d'enclume 10 et une position basse PB, illustrée à la figure 4, dans laquelle un espace de travail ESP (en référence aux figures 2 et 4) est créé entre la surface supérieure du rail d'enclume 20 et la surface de support du corps d'enclume 10. Comme cela sera présenté par la suite, un tel espace de travail ESP permet le passage d'un outil d'usinage et/ou de décapage 50 comme illustré aux figures 5 et 6.

Un rail d'enclume 20 va dorénavant être présenté de manière détaillée en référence aux figures 5 à 8. Le rail d'enclume 20 comprend une poutre de structure 21, de préférence métallique, s'étendant sur toute la longueur du corps d'enclume 10. Dans cet exemple, la poutre de structure 21 est longiligne et incurvée de manière à s'étendre dans le prolongement de la surface de support du corps d'enclume 10 en position de soudage. Comme illustré à la figure 5, la poutre de structure 21 comporte deux nervures 22 de support des panneaux 2, 3 et 4 et une rampe de guidage 23 d'un porte-outil 24.

La poutre de structure 21 est dimensionnée pour supporter des efforts de soudage par compression, en particulier, un soudage du type friction malaxage, des panneaux 2, 3 et 4.

La rampe de guidage 23 s'étend selon la longueur de la poutre de structure 21 et latéralement à cette dernière comme illustré à la figure 5. La rampe de guidage 23 comprend une surface dentée 23a adaptée pour coopérer avec une roue dentée 24a du porte-outil 24 de manière à former un système de crémaillère permettant de déplacer le porte-outil 24 le long de la poutre de structure 21 afin d'usiner, de décaper et/ou de souder les panneaux 2, 3 et 4 à l'aide d'un outil d'usinage et/ou de décapage 50 monté sur le porte-outil 24.

Le porte-outil 24 est de préférence entrainé par des moyens d'entrainement (non représentés) comprenant par exemple un moteur adapté pour entraîner en rotation la roue dentée 24a. Ainsi, il suffit à un opérateur de commander ledit moteur afin de modifier la position du porte-outil 24 sur le rail d'enclume 20.

Le porte-outil 24 comporte en outre un déflectomètre 25 de manière à contrôler une opération réalisée par l'outil 50 sur les bords de panneaux 2, 3 et 4, notamment pour contrôler la qualité d'une opération de décapage.

En variante, le corps d'enclume 10 peut être monobloc de sorte à fournir une surface supérieure de support continue. En d'autres termes, le corps d'enclume peut être dépourvu de cavités 17 et de rails d'enclume 20.

Le corps d'enclume 10 a pour fonction d'être un unique référentiel de positionnement pour les panneaux 2, 3 et 4 au cours de leurs différentes étapes d'assemblage afin de garantir un assemblage précis.

Dans cet exemple, le corps d'enclume 10 comporte un module de positionnement du panneau central 3 qui se présente sous la forme de deux tables aspirantes 32 adaptée pour bloquer la position du panneau central 3. Une table aspirante, bien connue de l'homme du métier, permet d'aspirer une surface d'un objet afin de la maintenir plaquée sur ladite table de manière à pouvoir le travailler, par exemple pour l'usiner, le décaper ou le souder. Comme illustré notamment aux figures 1 et 2, chaque table aspirante 32 se présente dans cet exemple sous la forme d'un patin de longueur au moins égale à celle du panneau à maintenir et épousant la forme de celui-ci.

### b) Moyens de déplacement

Les premiers moyens de déplacement du premier panneau latéral 2 par rapport au panneau central 3 comportent un premier support 31 apte à recevoir le premier panneau latéral 2 et un mécanisme de guidage 34 du premier support 31 par rapport à une première partie latérale 10α du corps d'enclume 10.

De manière similaire, les deuxièmes moyens de déplacement du deuxième panneau latéral 4 par rapport au panneau central 3 comportent un deuxième support 33 apte à recevoir le deuxième panneau latéral 4 et un mécanisme de guidage 34 du deuxième support 33 par rapport à une deuxième partie latérale 10c du corps d'enclume 10.

Les deux supports de panneau latéraux mobiles 31 et 33 se présentent chacun sous la forme d'une armature structurelle de forme incurvée tandis que les mécanismes de guidage 34 comportent un ensemble de rails et de rainures permettant aux supports 31, 33 de coulisser par rapport au corps de l'enclume 10. De manière préférée, chaque mécanisme de guidage 34 comporte une vis sans fin pour régler le coulissant et un volant de commande 40 adapté pour être manipulé par un opérateur (non représenté) afin d'entraîner en rotation ladite vis sans fin. Il va de soi que d'autres mécanismes de guidage pourraient également convenir (crémaillère, vérin, etc.). Il va de soi que la commande du déplacement peut être manuelle ou motorisée.

L'armature des supports 31, 33 est similaire à celle du corps d'enclume 10 et définit ainsi une pluralité de caissons 37.

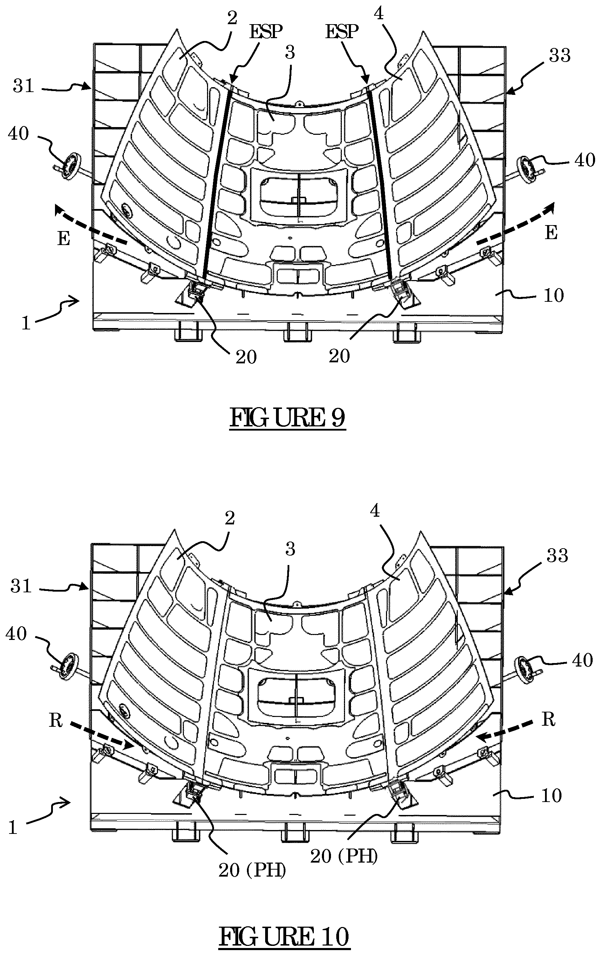

Grâce aux premiers moyens de déplacement et aux deuxièmes moyens de déplacement, les panneaux latéraux 2, 4 sont agencés pour se déplacer entre une position d'usinage, illustrée à la figure 9, et une position de soudage, illustrée à la figure 10.

En position d'usinage, une distance d'usinage existe entre chaque panneau latéral 2, 4 et le panneau central fixe 3 de sorte que chaque couple de bords à joindre des panneaux (2, 3) et (3, 4) soit apte à être usiné simultanément avec un même outil d'usinage.

La position d'usinage peut également correspondre à une position de décapage dans laquelle un revêtement appliqué sur les panneaux 2, 3 et 4 peut être retiré à l'aide d'un outil de décapage.

En position de soudage, les supports de panneaux mobiles 31 et 33 sont déplacés de sorte que les bords des panneaux (2, 3) et (3, 4) soient adjacents deux à deux afin de pouvoir être soudés ensemble avec un outil de soudage.

Afin de positionner les panneaux latéraux 2, 4 sur les supports 31, 33, ces derniers comprennent des moyens de positionnement des panneaux 2 et 4 dans une position prédéterminée afin d'effectuer les étapes d'usinage et de soudage. Comme illustré à la figure 3, de tels moyens de positionnement se présentent dans cet exemple sous la forme d'une pluralité de broches 38 configurées pour être reçues respectivement dans des alésages formés dans les panneaux latéraux 2, 4 de sorte à les maintenir dans la position prédéterminée sur les supports 31, 33. De préférence, comme illustré à la figure 1, les supports 31, 33 comprennent chacun une pluralité de ventouses 39a permettant de maintenir de manière stable les panneaux latéraux 2, 4 pendant l'assemblage.

Chacun des supports 31, 33 comprend une table aspirante 39b disposée parallèlement à la table aspirante 32 destinée à maintenir le panneau central 3 de sorte à recevoir et supporter les bords à joindre des panneaux latéraux 2, 4 disposés sur les supports 31, 33.

On notera enfin que les tables aspirantes 32 et 39b ainsi que la poutre de structure 21 comprennent des moyens de dissipation de chaleur, notamment de la chaleur d'une soudure par friction malaxage.

Comme illustré aux figures 4 et 6, ces moyens de dissipations de chaleur se présentent sous la forme de radiateurs 42 comprenant une pluralité de lames dissipatrices de chaleur, de préférence en aluminium, montés sur la partie inférieure respectivement des tables aspirantes 32 et 39b et de la poutre de structure 21.

### 2) Mise en oeuvre

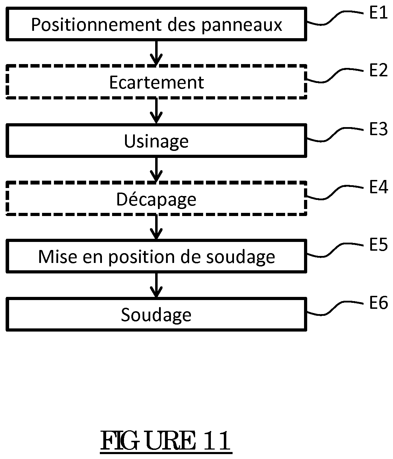

L'assemblage des panneaux 2, 3 et 4 comprend une pluralité d'étapes, décrites ci-après notamment en référence à la figure 11, permettant de les solidariser deux à deux par au moins un de leurs bords.

### a) Positionnement des panneaux 2, 3 et 4 sur le dispositif 1

Afin d'augmenter la qualité et la précision de l'assemblage, il eSt prévu tout d'abord une étape E1 de positionnement du panneau central sur son module de positionnement 32 et des panneaux latéraux 2, 4 sur leurs supports mobiles 31, 33 à l'aide des moyens de positionnement 18, 38 de sorte que deux bords à joindre soient en contact l'un de l'autre.

Chaque panneau 2, 3 et 4 est maintenu plaqué par l'action conjuguée de la pluralité de ventouses 16, 39a et des tables aspirantes 32 et 39b.

De manière préférée, les panneaux latéraux 2, 4 sont positionnés de manière adjacente deux à deux par rapport au panneau central 3 lors de leur positionnement sur leurs supports mobiles 31, 33.

Afin de procéder à l'usinage, aussi appelé « détourage », des bords à joindre, les supports mobiles 31, 33 sont tout d'abord écartés d'une distance d'usinage du panneau central fixe 3 dans une étape E2 d'écartement E illustrée à la figure 9. L'écartement est défini de manière à ce que la distance d'usinage autorise le passage d'un outil d'usinage entre lesdits bords afin de les usiner simultanément. Dans cet exemple de mise en oeuvre, la distance d'usinage entre lesdits bords à joindre est comprise entre 0 et 5 mm.

En variante, le positionnement des panneaux latéraux 2, 4 peut être directement réalisé en position d'usinage, écartée, du panneau central 3.

### b) Usinage des bords à joindre

L'usinage des bords des panneaux 2, 3 et 4 est réalisé dans une étape E3.

Dans cet exemple de mise en oeuvre, l'outil d'usinage se présente sous la forme d'une fraise rotative d'un diamètre de l'ordre de 6 mm.

Dans un premier mode de réalisation, les rails d'enclume 20 sont placés en position basse PB et les bords à joindre des panneaux sont usinés par un outil d'usinage (non représenté) se déplaçant au-dessus des panneaux 2, 3 et 4 (par exemple en étant fixé au bout d'un bras robotisé ou sur un portique).

Dans un deuxième mode de réalisation, les rails d'enclume 20 sont également placés en position basse PB et un outil d'usinage 50 est fixé sur le porte-outil 24 de chaque rail d'enclume 20 afin de réaliser l'usinage des bords.

### c) Découpage des bords

Lorsque les panneaux 2, 3, 4 comprennent un revêtement sur leurs faces inférieures (en position des panneaux 2, 3 et 4 sur le dispositif 1), il est nécessaire de retirer ce revêtement au niveau des bords à joindre afin d'améliorer la qualité du soudage desdits bords.

Pour ce faire, les rails d'enclume 20 sont placés en position basse PB, un outil de décapage 50 est monté sur le porte-outil 24 et les bords à joindre sont rapprochés, si nécessaire, dans une position de décapage dans laquelle ils sont espacés d'une distance comprise entre 0 et 1 mm afin de réaliser ce décapage dans une étape E4.

Lorsque l'usinage a été préalablement réalisé par un outil d'usinage monté sur le porte-outil 24 du rail d'enclume 20 en position basse PB, l'outil d'usinage est tout d'abord démonté du porte-outil 24 puis un outil de décapage 50 est monté sur le porte-outil 24.

La qualité du décapage est contrôlée pendant l'étape de décapage par le déflectomètre 25 monté sur le porte-outil 24. Un défaut détecté par le déflectomètre 25 peut être repris par l'outil de décapage 50.

### d) Soudage

L'usinage de deux bords à joindre ayant été réalisé simultanément par le système d'assemblage 1, lesdits bords possède une complémentarité de forme telle que le jeu entre les bords est avantageusement très faible, inférieur à 0,5 mm, lorsqu'ils sont positionnés bord à bord.

Une fois usinés et optionnellement décapés, les panneaux latéraux 2 et 4 et le panneau central 3 sont donc positionnés bord à bord dans une position de soudage dans une étape E5 de rapprochement R, comme illustré à la figure 10, de sorte que la distance entre les bords à joindre soit inférieure à 0,5 mm.

Si les bords à joindre n'ont pas été décapés, ils sont rapprochés deux à deux en déplaçant les supports mobiles 31 et 33 de la position d'usinage à la position de soudage.

Si les bords à joindre ont été décapés, ils sont rapprochés, si nécessaire, deux à deux en déplaçant les supports mobiles 31 et 33 de la position de décapage à la position de soudage.

Avant de souder les panneaux 2, 3 et 4 dans une étape E6, les rails d'enclume 20 sont placés en position haute PH de manière à former un contre-appui efficace et solide pour les panneaux 2, 3 et 4 lors du soudage, notamment lorsque celui-ci est réalisé par friction malaxage.

Le soudage est réalisé de préférence par friction malaxage mais il va de soi que tout autre type de soudage peut être utilisé.

Une fois des panneaux disposés bord à bord et en appui sur les nervures 22 des rails d'enclume 20 en position haute PH, les panneaux 2, 3 et 4 sont soudés, de préférence et avantageusement simultanément par deux outils de soudage.

Le dispositif selon l'invention permet avantageusement d'usiner plusieurs panneaux simultanément.

Plus particulièrement, l'utilisation d'un unique outil pour usiner les bords de deux panneaux à souder permet de les rendre avantageusement complémentaires et de réduire considérablement le jeu entre lesdits panneaux, ce qui rend la soudure à la fois solide et esthétique.

De plus, l'usinage et le soudage des trois panneaux est ainsi avantageusement très rapide puisqu'il est réalisé sur un même dispositif d'assemblage 1 sans avoir à manipuler manuellement les panneaux 2, 3 et 4.

On notera en outre que le système d'assemblage 1 selon l'invention permet avantageusement de réaliser un usinage, un décapage et un soudage de manière simultanée pour chaque paire de panneaux (2, 3) et (3, 4) à assembler.

De préférence, l'usinage et le soudage sont réalisés par un outil se déplaçant au-dessus des panneaux 2, 3 et 4 et le décapage, lorsqu'il a lieu, est réalisé par un outil 50 se déplaçant sur le rail d'enclume 20, dessous les panneaux positionnés sur le dispositif 1.

Notamment, les formes, la nature, les dimensions et les caractéristiques en termes de matériau du corps d'enclume 10, des rails d'enclume 20, des supports 31, 33 tels que représentés sur les figures de façon à illustrer un exemple de réalisation de l'invention, ne sauraient être interprétés comme limitatives.

## Revendications

1. Dispositif pour l'assemblage d'une pluralité de panneaux (2, 3, 4) de fuselage d'un aéronef, ledit dispositif comprenant au moins un corps d'enclume (10) comportant une surface de support de ladite pluralité de panneaux (2, 3, 4), ledit corps d'enclume (10) comprenant au moins un rail d'enclume (20) monté mobile dans une cavité (17) du corps d'enclume (10) et configuré pour se déplacer entre une position haute (PH) dans laquelle la surface supérieure du rail d'enclume (20) s'étend dans le prolongement de la surface de support et une position basse (PB) dans laquelle un espace de travail (ESP) est créé entre la surface supérieure du rail d'enclume (20) et la surface de support de sorte à permettre le passage d'un outil (50) d'usinage et/ou de décapage, ledit rail d'enclume (20) comprenant une poutre de structure (21) s'étendant sur toute la longueur du corps d'enclume (10), ledit dispositif étant **caractérisé en ce qu'**il comporte un porte-outil (24) et une rampe (23) de guidage dudit porte-outil (24).

2. Dispositif selon la revendication 1, **caractérisé en ce que** le rail d'enclume (20) comprend des moyens de dissipation de chaleur (42).

3. Dispositif selon la revendication 2, **caractérisé en ce que** les moyens de dissipation de chaleur (42) sont montés sur la partie inférieure de la poutre de structure (21).

4. Dispositif selon l'une des revendications précédentes 2 et 3, **caractérisé en ce que** les moyens de dissipation de chaleur se présentent sous la forme d'un radiateur (42) comprenant des lames en aluminium.

5. Dispositif selon l'une des revendications précédentes, **caractérisé en ce que** la poutre de structure (21) comporte deux nervures (22) de support d'un premier panneau (2, 4) et d'un deuxième panneau (3) servant de contre-appui robuste pour le soudage de leurs bords et permettant en outre de guider un porte-outil (24) de sorte qu'un outil (50) puisse se déplacer le long du rail d'enclume (20).

6. Dispositif selon l'une des revendications précédentes, **caractérisé en ce que** la rampe de guidage (23) s'étend selon la longueur de la poutre de structure (21) et latéralement à cette dernière de manière à permettre le déplacement du porte-outil (24) le long de la poutre de structure (21) sur la longueur des bords à joindre.

7. Dispositif selon l'une des revendications précédentes, **caractérisé en ce que** le porte-outil (24) comporte un déflectomètre (25) de manière à contrôler une opération réalisée par un outil (50) monté dans ledit porte-outil (24).

8. Dispositif selon l'une des revendications précédentes, **caractérisé en ce qu'**il comprend un outil (50) d'usinage et/ou de décapage monté dans le porte-outil (24) du rail d'enclume (20).

9. Système pour l'assemblage d'une pluralité de panneaux (2, 3, 4) de fuselage d'un aéronef comprenant un dispositif selon l'une des revendications précédentes, au moins un premier panneau (2, 4) et un deuxième panneau (3), et des moyens de déplacement montés sur le corps d'enclume, lesdits moyens de déplacement étant agencés pour déplacer le premier panneau (2, 4) par rapport au deuxième panneau (3) entre une première position d'usinage dans laquelle un bord du premier panneau (2, 4) et un bord du deuxième panneau (3) sont écartés d'une distance d'usinage de manière à autoriser le passage d'un outil d'usinage entre lesdits bords afin de les usiner simultanément et une deuxième position de soudage dans laquelle ledit bord du premier panneau (2, 4) et ledit bord du deuxième panneau (3) sont adjacents et en appui sur ledit corps d'enclume (10).

10. Système selon la revendication 9, **caractérisé en ce que** les moyens de déplacement comportent un support mobile (31 ; 33), sur lequel est positionné le premier panneau (2, 4), et un mécanisme de guidage du support mobile par rapport à une première partie latérale du corps d'enclume (10).

11. Système selon l'une des revendications précédentes 9 et 10, **caractérisé en ce que** le corps d'enclume (10) possède une surface de support supérieure de forme incurvée de manière à épouser la forme d'une pointe avant d'aéronef.

12. Système selon l'une des revendications précédentes 9 à 11, **caractérisé en ce que** le système comprend des moyens de positionnement des panneaux (2, 3, 4).

13. Système selon l'une des revendications précédentes 9 à 12, **caractérisé en ce que** les moyens de positionnement des panneaux (2, 3, 4) se présentent sous la forme d'une pluralité de broches (18, 38) et d'alésages complémentaires montés sur le ou les supports mobiles (31 ; 33).

14. Système selon l'une des revendications précédentes 9 à 13, **caractérisé en ce que** le système comprend des moyens de maintien du premier panneau et du deuxième panneau (3) comprenant au moins une table aspirante (39b) agencée pour recevoir un bord à joindre d'un panneau (2, 3, 4).

15. Système selon la revendication 14, **caractérisé en ce que** la ou les tables aspirantes (39b) comprennent des moyens de dissipation de chaleur.

## Patentansprüche

1. Vorrichtung zur Montage von mehreren Rumpf-Bauplatten (2, 3, 4) eines Luftfahrzeugs, wobei die genannte Vorrichtung mindestens einen Gegenhalte-Körper (10) enthält, der eine Stützfläche für die genannten Bauplatten (2, 3, 4) umfasst, wobei der Gegenhalte-Körper (10) mindestens eine Gegenhalte-Schiene (20) umfasst, die beweglich in einer Öffnung (17) des Gegenhalte-Körpers (10) montiert und so konfiguriert ist, dass sie sich zwischen einer oberen Position (PH), in der sich die obere Fläche der Gegenhalte-Schiene (20) in der Verlängerung der Stützoberfläche erstreckt, und einer unteren Position (PB) bewegt, in der ein Arbeitsbereich (ESP) zwischen der oberen Fläche der Gegenhalte-Schiene (20) und der Stützoberfläche erzeugt wird, so dass ein Werkzeug (50) zum Bearbeiten und/oder Ätzen geführt werden kann, wobei die genannte Gegenhalte-Schiene (20) einen Träger (21) umfasst, der sich über die gesamte Länge des Gegenhalte-Körpers (10) erstreckt, wobei die genannte Vorrichtung **dadurch gekennzeichnet ist, dass** sie einen Werkzeughalter (24) und eine Führungsschiene (23) für den genannten Werkzeughalter (24) umfasst.

2. Vorrichtung nach Anspruch 1, **dadurch gekennzeichnet, dass** die Gegenhalte-Schiene (20) Mittel zur Wärmeableitung (42) umfasst.

3. Vorrichtung nach Anspruch 2, **dadurch gekennzeichnet, dass** die Mittel zur Wärmeableitung (42) an der Unterseite des Trägers (21) angebracht sind.

4. Vorrichtung nach einem der Ansprüche 2 und 3, **dadurch gekennzeichnet, dass** die Mittel zur Wärmeableitung in Form eines Kühlkörpers (42) mit Aluminiumlamellen gestaltet sind.

5. Vorrichtung nach einem der vorhergehenden Ansprüche, **dadurch gekennzeichnet, dass** der Träger (21) zwei Stütz-Rippen (22) für eine erste Bauplatte (2, 4) und eine zweite Bauplatte (3) umfasst, die als stabiles Gegenlager für das Schweißen ihrer Kanten dienen und darüber hinaus die Führung eines Werkzeughalters (24) ermöglichen, so dass sich ein Werkzeug (50) auf der Gegenhalte-Schiene (20) bewegen kann.

6. Vorrichtung nach einem der vorhergehenden Ansprüche, **dadurch gekennzeichnet, dass** die Führungsschiene (23) sich über die gesamte Länge des Trägers (21) erstreckt und seitlich an Letzterem angebracht ist, so dass eine Bewegung des Werkzeughalters (24) entlang des Trägers (21) über die gesamte Länge der zu fügenden Kanten möglich ist.

7. Vorrichtung nach einem der vorhergehenden Ansprüche, **dadurch gekennzeichnet, dass** der Werkzeughalter (24) einen Durchbiegungsmesser (25) beinhaltet, um einen Vorgang zu kontrollieren, der vom Werkzeug (50) durchgeführt wird, das im genannten Werkzeughalter (24) montiert ist.

8. Vorrichtung nach einem der vorhergehenden Ansprüche, **dadurch gekennzeichnet, dass** es ein Werkzeug (50) zum Bearbeiten und/oder Ätzen umfasst, das im Werkzeughalter (24) der Gegenhalte-Schiene (20) montiert ist.

9. System zur Montage von mehreren Rumpf-Bauplatten (2, 3, 4) eines Luftfahrzeugs, das eine Vorrichtung nach einem der vorhergehenden Ansprüche, mindestens eine erste Bauplatte (2, 4) und eine zweite Bauplatte (3) sowie Mittel zur Verschiebung, die auf dem Gegenhalte-Körper montiert sind, umfasst, wobei die genannten Mittel zur Verschiebung so gestaltet sind, dass die erste Bauplatte (2, 4) relativ zur zweiten Bauplatte (3) zwischen einer ersten Bearbeitungsposition, in der eine Kante der ersten Bauplatte (2, 4) und eine Kante der zweiten Bauplatte (3) einen Bearbeitungsabstand zueinander aufweisen, so dass ein Bearbeitungswerkzeug zwischen den genannten Kanten geführt werden kann, um sie gleichzeitig zu bearbeiten, und einer zweiten Schweißposition bewegt wird, in der die genannte Kante der ersten Bauplatte (2, 4) und die genannte Kante der zweiten Bauplatte (3) nebeneinanderliegen und auf dem Gegenhalte-Körper (10) aufliegen.

10. System nach Anspruch 9, **dadurch gekennzeichnet, dass** die Mittel zur Verschiebung eine bewegliche Auflage (31; 33) umfassen, auf der die erste Bauplatte (2, 4) positioniert wird, sowie einen Führungsmechanismus der beweglichen Auflage zur Verschiebung relativ zu einem ersten seitlichen Bereich des Gegenhalte-Körpers (10).

11. System nach einem der Ansprüche 9 und 10, **dadurch gekennzeichnet, dass** der Gegenhalte-Körper (10) eine obere gebogene Stützfläche besitzt, die der Form des vorderen Teils eines Luftfahrzeugs entspricht.

12. System nach einem der vorhergehenden Ansprüche 9 bis 11, **dadurch gekennzeichnet, dass** das System Mittel zur Positionierung der Bauplatten (2, 3, 4) umfasst.

13. System nach einem der vorhergehenden Ansprüche 9 bis 12, **dadurch gekennzeichnet, dass** die Mittel zur Positionierung der Bauplatten (2, 3, 4) in Form von mehreren Stiften (18, 38) und entsprechenden Bohrungen umgesetzt werden, die sich an der bzw. den beweglichen Auflagen (31, 33) befinden.

14. System nach einem der vorhergehenden Ansprüche 9 bis 13, **dadurch gekennzeichnet, dass** das System Mittel zum Festhalten der ersten Bauplatte und der zweiten Bauplatte (3) umfasst, die mindestens einen Absaugtisch (39b) umfassen, der so gestaltet ist, dass er eine zu fügenden Kante einer Bauplatte (2, 3, 4) aufnehmen kann.

15. System nach Anspruch 14, **dadurch gekennzeichnet, dass** der oder die Absaugtisch/e (39b) Mittel zur Wärmeableitung umfasst/umfassen.

## Claims

1. Device to assemble a plurality of panels (2, 3, 4) for the body of an aircraft, said device comprising at least one anvil body (10), comprising a support surface of said plurality of panels (2, 3, 4), said anvil body (10) comprising at least one anvil rail (20) assembled mobile in a cavity (17) of the anvil body (10) and configured to be moved between a high position (PH) wherein the upper surface of the anvil rail (20) extends in the extension of the support surface and a low position (PB) wherein a work space (ESP) is created between the upper surface of the anvil rail (20) and the support surface, so as to enable a machining and/or scraping tool (50) to be able to be passed through, said anvil rail (20) comprising a structural beam (21) extending over the whole length of the anvil body (10), said device being **characterised in that** it comprises a tool holder (24) and a ramp (23) for guiding said tool holder (24).

2. Device according to claim 1, **characterised in that** the anvil rail (20) comprises heat dissipation means (42).

3. Device according to claim 2, **characterised in that** the heat dissipation means (42) are assembled on the lower section of the structural beam (21).

4. Device according to one of the preceding claims 2 and 3, **characterised in that** the heat dissipation means are presented in the form of a radiator (42) comprising aluminium blades.

5. Device according to one of the preceding claims, **characterised in that** the structural beam (21) comprises two support ridges (22) of a first panel (2, 4) and a second panel (3) serving as solid counter-support for welding their edges together and additionally enabling a tool holder (24) to be guided, so that a tool (50) can be moved along the anvil rail (20).

6. Device according to one of the preceding claims, **characterised in that** the guiding ramp (23) extends according to the length of the structural beam (21) and laterally to this structural beam in a way to enable the tool holder (24) to move along the structural beam (21) over the length of the joining edges.

7. Device according to one of the preceding claims, **characterised in that** the tool holder (24) comprises a deflectometer (25) in a way to control an operation carried out by a tool (50) assembled in said tool holder (24).

8. Device according to one of the preceding claims, **characterised in that** it comprises a machining and/or scraping tool (50) assembled in the tool holder (24) of the anvil rail (20).

9. System to assemble a plurality of panels (2, 3, 4) for the body of an aircraft, comprising a device according to one of the preceding claims, at least one first panel (2, 4) and one second panel (3), and movement means assembled on the anvil body, said movement means being disposed to move the first panel (2, 4) in relation to the second panel (3) between a first machining position wherein an edge of the first panel (2, 4) and an edge of the second panel (3) are spread at a machining distance in a way to enable a machining tool to be passed between said edges in order to use them simultaneously and a second welding position wherein said edge of the first panel (2, 4) and said edge of the second panel (3) are adjacent and supporting on said anvil body (10).

10. System according to claim 9, **characterised in that** the movement means comprise a mobile support (31; 33), whereon is positioned the first panel (2, 4) and a guiding mechanism of the mobile support in relation to a first lateral section of the anvil body (10).

11. System according to one of the preceding claims 9 and 10, **characterised in that** the anvil body (10) has an upper, curved support surface, in a way to mould the shape of an aircraft front pointing.

12. System according to one of the preceding claims 9 to 11, **characterised in that** the system comprises panel (2, 3, 4) positioning means.

13. System according to one of the preceding claims 9 to 12, **characterised in that** the panel (2, 3,4) positioning means are presented in the form of a plurality of additional pins (18, 38) and bores assembled on the mobile support(s) (31; 33).

14. System according to one of the preceding claims 9 to 13, **characterised in that** the system comprises means for holding the first panel and the second panel (3) comprising at least one suction table (39b) disposed to hold a joining edge of a panel (2, 3, 4).

15. System according to claim 14, **characterised in that** the suction table(s) (39b) comprise heat dissipation means.
